# EUROPÄISCHE PATENTANMELDUNG

(11) **EP 1 118 495 A1**
(43) Veröffentlichungstag der Anmeldung: **25.07.2001**
(21) Anmeldenummer: 01100355.5
(22) Anmeldetag: 05.01.2001
(51) Int. Cl.: B60L 5/20

(54) **Schleifelemente für Stromabnehmer**

(30) Priorität: 21.01.2000 DE 10002433
(71) Anmelder: SGL CARBON AG, 65203 Wiesbaden (DE)
(72) Erfinder: Vesper, Wolfgang, Dr., 53115 Bonn (DE); Fischer, Ludger, Dr., 53343 Wachtberg (DE); Exon, Dana, Westminster, CA 92683 (US)

(57) **Zusammenfassung**

Schleifelement für Stromabnehmer zur Ableitung von elektrischer Energie von einer Fahrleitung auf ein elektrisch angetriebenes Fahrzeug, wobei die Fahrleitung ortsfest ist und die Stromabnehmer mit dem Fahrzeug verbunden und beweglich sind, mit den Elementen Kohlenstoffschleifkörper, Träger und elektrischer Leiter, dadurch gekennzeichnet, daß Träger und elektrischer Leiter separate Bauteile sind, wobei das Material der Träger ausgewählt ist aus faserverstärkten Verbundwerkstoffen und Metallen, und Träger und elektrischer Leiter auf der der Fahrleitung abgewandten Seite des Kohlenstoffschleifkörpers angeordnet sind, und der elektrische Leiter vorzugsweise in der Mitte dieser Seite angeordnet ist

## Beschreibung

Die Erfindung betrifft Schleifelemente für Stromabnehmer.

Fahrzeugen, die von Elektromotoren angetrieben werden, kann die erforderliche elektrische Energie durch in Richtung der Fahrtrichtung angeordnete ortsfeste, meist metallische Leiter und an dem Fahrzeug befindliche, den Leiter berührende Schleifelemente oder Schleifkontakte zugeführt werden.

Der Abrieb von dem Schleifelement durch Reibung an dem Fahrleitungsdraht muß möglichst niedrig sein. Daher bestehen diese Schleifelemente häufig aus einer Kohlenstoffleiste, im Deutschen umgangssprachlich auch als Kohle-Leiste bezeichnet, die mit einem metallischen Träger verbunden ist. Der metallische Träger hat dabei sowohl eine mechanische Funktion (Unterstützung der gegen Verbiegen und Zug spröden Kohlenstoffleiste), als auch eine elektrische (Ableiten des von dem KohlenstoffSchleifkörper aufgenommenen Stromes).

Da die durchgeleiteten Ströme bezogen auf die Profilbreite der Kohlenstoffleiste hoch sind (5 bis 15 A/mm), ist ein niedriger Übergangswiderstand zwischen Kohlenstoffelement und Metallträger erwünscht.

Die Verbindung erfolgt durch Klemmen, Nieten, Schrauben, Verkleben oder Löten. Die Verbiegung der auf diese Weise zusammengefügten Materialien bei Temperaturänderung (Bimetall-Effekt wegen der unterschiedlichen Wärmedehnung von Kohlenstoff und Metall) sollte durch konstruktive Maßnahmen gering gehalten werden.

Üblicherweise befestigt man zur Konstruktion eines Schleifelementes eine Kohlenstoffleiste auf einem metallischen Träger, wobei die ganze Unterfläche der Kohlenstoffleiste oder ein möglichst großer Teil davon mit dem Metallteil abgedeckt ist, beispielsweise durch Kleben. Zwischen den freiliegenden Oberflächen des Metallträgers und dem Leiter (Fahrdraht) kann dann, insbesondere in feuchter Luft, ein elektrischer Überschlag im Sinne einer Lichtbogen-Entladung vorkommen. Derartige Überschläge werden besonders bei Bildung einer zusammenhängenden Schicht (beispielsweise durch Nässe, Eis oder Rauhreif) von leitfähigen Ablagerungen oder Kondensaten auf dem Stromabnehmer begünstigt. Da solche Überschläge durch den Lichtbogen zu einer plötzlichen starken Erwärmung und sogar zu Zerstörungen führen können, sind sie unerwünscht. Verkleinert man hingegen das Metallteil, so wird mit der geringeren Kontaktfläche zwischen Kohlenstoffleiste und Metall-Träger bei ansonsten gleichen Bedingungen der Übergangswiderstand höher. Zwischen dem mit dem Metall verbundenen Teil und dem freien Teil der Kohlenstoffleiste entstehen bei Erwärmung Spannungen, die sogar zum Versagen des Teils führen können.

Aus der Anmeldung DE-A 195 29 169 ist eine Konstruktion bekannt, bei der die Gefahr der Lichtbogenbildung zwischen metallischem Träger und dem Fahrdraht völlig vermieden werden kann. Auch der Bimetall-Effekt kann vermieden werden. Hierbei wird ein metallischer Träger in den inneren Hohlraum einer im Querschnitt rohrförmigen oder zumindest U- oder C-förmigen Kohlenstoffleiste verlegt. Als bevorzugte Ausführungsform ist eine direkte Anformung des Trägers an die Innenflächen des Hohlraumes beschrieben. Nachteilig ist jedoch die aufwendige Fertigung beispielsweise durch Einbringen von geschäumten Aluminium oder eines Vorformlings aus nicht ausgehärtetem faserverstärkten Kunststoff.

Die Aufgabe der Erfindung war daher die Bereitstellung eines Schleifelements, das trotz guten mechanischen Eigenschaften (Steifigkeit und Elastizität des Schleifelements) und geringem Gewicht eine geringe Überschlagsgefahr aufweist, und das eine einfache Fertigung erlaubt. Dies wurde gelöst durch ein Schleifelement für Stromabnehmer, bei dem die elektrische Funktion (Ableitung des Stromes mit möglichst niedrigem Übergangswiderstand) und die mechanische Funktion getrennt wurden.

Gegenstand der Erfindung ist ein Schleifelement für Stromabnehmer zur Ableitung von elektrischer Energie von einer Fahrleitung auf ein elektrisch angetriebenes Fahrzeug, wobei die Fahrleitung ortsfest ist und die Stromabnehmer mit dem Fahrzeug verbunden und beweglich sind, mit den Elementen Kohleschleifkörper, Träger und elektrischer Leiter, dadurch gekennzeichnet, daß Träger und elektrischer Leiter separate Bauteile sind, wobei der Träger aus faserverstärkten Verbundwerkstoffen besteht, und der elektrische Leiter auf der der Fahrleitung abgewandten Seite des Kohlenstoffschleifkörpers angeordnet ist.

Als separate Bauteile werden solche Teile bezeichnet, die nicht identisch sind oder zumindest einander nicht mit mehr als 60 % der Fläche des kleineren Bauteils, bevorzugt nicht mehr als 50 %, und insbesondere nicht mehr als 40 % berühren.

Der elektrische Leiter kann ein Metallblech sein, das auf den Mittelteil der Unterseite des Kohlenstoffschleifelements geklebt ist. Vorzugsweise wird jedoch ein Metallgewebeband verwendet, das die Spannungen bei ungleichmäßiger Wärmedehnung bzw. -schrumpfung aufnehmen kann. Vorzugsweise wird der elektrische Leiter in der Mitte der Unterseite des Kohlenstoffschleifelements aufgebracht. Das Metallgewebeband besteht insbesondere aus Kupfer- oder Aluminiumdrähten. Bevorzugterweise wird an mindestens einem Ende dieses Leiters eine Verbindungsvorrichtung (Kabelschuh oder -öse) angebracht, über die der Strom abgeleitet werden kann. Im Gegensatz zur konventionellen Technik können diese Kabelschuhe oder - ösen direkt mit dem Stromleiter des Pantographen verbunden werden.

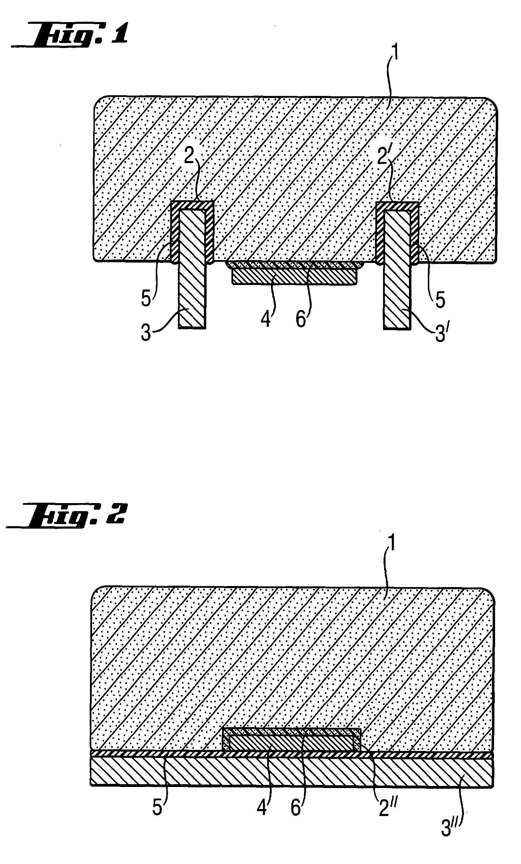

Zur Herstellung der erfindungsgemäßen Konstruktion werden, wie in der Fig. 1 dargestellt, zwei parallel verlaufende Nuten 2 und 2' an der dem Fahrdraht abgewandten Seite des Kohlenstoffschleifkörpers 1 eingefräst. Es ist auch möglich, bereits bei der Herstellung des Kohlenstoffschleifstücks die Nuten auszusparen, beispielsweise bei Herstellung des Kohlenstoffschleifstücks durch Strangpressen (Extrusion). Die Breite und die Tiefe der Nuten beträgt unabhängig voneinander 3 bis 15 mm, bevorzugt 4 bis 12 mm und insbesondere 5 bis 10 mm. In diese Nuten werden die Träger 3 und 3' eingelegt und mit einem Kleber 5 verklebt. Der elektrische Leiter 4 verläuft zwischen diesen Trägern und ist mit einem Kleber 6, der in bevorzugter Weise durch Zusatz von Kohlenstoff- oder Metallpulver leitfähig ist, auf dem Kohlenstoffschleifkörper aufgeklebt.

Die Höhe und Länge der Träger wird bei gegebener Breite und Tiefe der Nut die Steifigkeit und das Gewicht, aber auch den Luftwiderstand beeinflussen. Die Tiefe der Nut beeinflußt wiederum die nutzbare Abriebhöhe des Kohlenstoffschleifkörpers. Daher müssen diese Parameter sorgfältig aufeinander abgestimmt werden, in Hinblick auf den gewünschten Einsatzzweck. Die hier und weiter unten genannten Werte haben sich bei der praktische Realisierung als günstig erwiesen; sie beschreiben aber nur bevorzugte Ausführungsformen und sind daher nicht als limitierend anzusehen.

In ähnlicher Weise können auch zwei oder mehr Träger auf jeder Seite des elektrischen Leiters in den Kohlenstoffschleifkörper eingeklebt werden, indem auf jede Seite des elektrischen Leiters zwei oder mehr Nuten eingearbeitet werden. Auf diese Weise kann die Biegefestigkeit und damit die Stabilität der Konstruktion weiter erhöht werden.

Es ist erfindungsgemäß auch möglich, nur einen Träger einzusetzen. Der Aufbau des Stromabnehmers ist dann, wie in der Fig. 2 dargestellt. Auf der dem Fahrdraht abgewandten Seite des Kohlenstoffschleifkörpers 1 wird in der Mitte eine flache Nut 2'' eingefräst (oder bereits bei der Extrusion des Profils ausgespart), in die der elektrische Leiter 4 mit einem bevorzugt leitfähig ausgerüsteten Klebstoff 6 derart flächig verklebt wird, daß die Nut durch den Klebstoff und den Leiter möglichst völlig ausgefüllt wird. Anschließend wird die so gebildete im Wesentlichen glatte Unterseite mit weiterem Klebstoff 5 bestrichen, und der Träger 3' ' auf diese Fläche aufgeklebt. Dabei ist es möglich, daß der Träger die gesamte untere Seite des Kohlenstoffschleifkörpers bedeckt; es lassen sich jedoch auch solche Geometrien realisieren, bei denen Teile des Kohlenstoffschleifkörpers auf der Unterseite frei bleiben. Entscheidend für die Größe des Trägerteils ist das Abwägen von gewünschter Biegesteifigkeit und tolerierbarem Gewicht.

Das Herausführen des elektrischen Leiters erfolgt in diesem Fall durch eine im Träger befindliche Bohrung mit rundem oder rechteckigem Querschnitt.

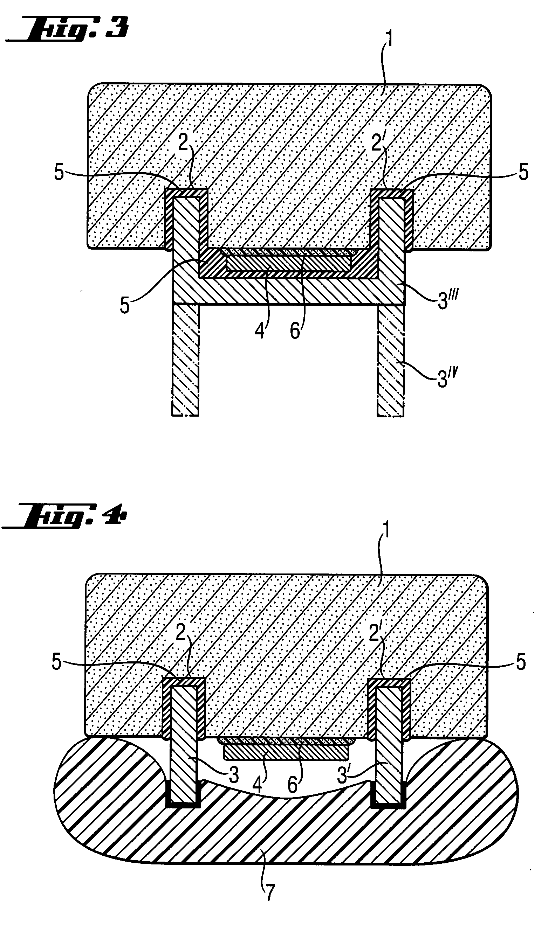

Eine weitere bevorzugte Ausführungsform ergibt sich, wenn in zwei parallele Nuten (wie in der ersten Ausführungsform) anstelle der zwei separaten Träger-Stäbe ein H- oder U-förmiges Profil eingeklebt wird. Diese Ausführungsform ist in der Fig. 3 dargestellt:
Zwei parallel verlaufende Nuten 2 und 2' sind an der dem Fahrdraht abgewandten Seite des Kohlenstoffschleifkörpers 1 eingefräst. Es ist auch möglich, bereits bei der Herstellung des Kohlenstoffschleifstücks die Nuten auszusparen, beispielsweise bei Herstellung des Kohlenstoffschleifstücks durch Strangpressen (Extrusion). Die Breite und die Tiefe der Nuten beträgt unabhängig voneinander 3 bis 15 mm, bevorzugt 4 bis 12, und insbesondere 5 bis 10 mm. In diese Nuten wird ein U-förmiger Träger 3''' oder ein H-förmiger Träger 3^{IV} eingelegt und mit einem Kleber 5 mit dem Kohlenstoffschleifkörper verklebt. Der elektrische Leiter 4 verläuft auf der dem Profil zugewandten Seite des Kohleschleifkörpers und ist mit einem Kleber 6, der in bevorzugter Weise durch Zusatz von Kohlenstoff- oder Metallpulver leitfähig modifiziert ist, auf dem Kohlenstoffschleifkörper aufgeklebt.

Der Übergangswiderstand zwischen dem Kohlenstoffschleifkörper und dem Metall(gewebe)band kann auf bekannte Weise gemäß EP-A 0 313 880 dadurch verringert werden, daß die Unterseite des Kohlenstoffschleifkörpers aufgerauht wird, mit einer mittleren Rauhtiefe R_{z} von mindestens 40 µm und einer Rauhtiefe Rₜ von mindestens 50 µm, und mindestens eine der bevorzugt 0,05 bis 0,15 mm dicken Klebstoffschichten auf dem Kohlenstoffschleifkörper und auf dem Metallband durch Auftragen von elektrisch leitenden Metall- oder Graphit-Partikeln in einer mittleren Korngröße von über 0,1 mm vorzugsweise in einer Menge, die etwa dem halben Volumen der Klebstoffschicht entspricht, in ihrer elektrischen Leitfähigkeit verbessert wird, bevor die Klebeverbindung durch Aufeinanderpressen der beiden mit dem leitfähig ausgerüsteten Klebstoff bestrichenen Flächen hergestellt wird. Als Klebstoffe lassen sich in besonders günstiger Weise die bekannten Zweikomponenten-Kleber auf Epoxidharzbasis oder auch solche auf Basis von Phenolharzen einsetzen.

Es ist auch möglich und im Rahmen der vorliegenden Erfindung bevorzugt, auf das Metall(gewebe)band eine isolierende und gegen Korrosion schützende Schicht aufzubringen, dies kann durch Einlegen und nachfolgendes Aushärten von mit reaktiven Harzen getränkten Glasfasermatten-Streifen oder durch Ausgießen des Zwischenraumes zwischen den durch die überstehenden Teile der Träger gebildeten Stegen mit faserverstärkten wärmehärtenden Harzen erfolgen. Es ist auch möglich und bevorzugt, über den metallischen Leiter und zwischen die genannten Stege, vorzugsweise mit diesen abschließend, ein U-Profil aus faserverstärkten Kunstharzen oder Kunststoffen einzukleben. Soweit keine oder nur eine unvollständige Abdeckung des metallischen Leiters auf der Unterseite des Kohlenstoffschleifkörpers erfolgt, kann dieser auch durch Beschichten mit geeigneten Lacken gegen Korrosion geschützt werden.

Eine weitere Möglichkeit zum Schutz gegen Korrosion, die gleichzeitig auch zur Verbesserung der aerodynamischen Eigenschaften der Stromabnehmer-Konstruktion dient, ist die Verkleidung der Konstruktion auf der dem Fahrdraht abgewandten Seite mit einem Profil aus einem nichtleitenden Körper, bevorzugt einem Kunststoff-Profil. Dabei kann das Profil aus massivem Kunststoff bestehen, oder vorzugsweise aus einem geschäumten Kunststoff, wobei es insbesondere so ausgeführt wird, daß es durch ein Aufkleben oder Aufklipsen auf die oben beschriebene Konstruktion befestigt wird. Eine mögliche Ausführungsform eines derartigen Profils 7 ist in der Fig. 4 dargestellt, wobei die Konstruktion im Übrigen der der Fig. 1 entspricht.

Ein Träger besteht aus mindestens einem zur Hauptrichtung des Kohlenstoffschleifkörpers parallelen Stab, der quaderförmig oder prismenförmig ausgebildet ist, wobei der Stab auf der dem Fahrdraht abgewandten Seite des Kohleschleifkörpers in diesen eingelassen ist. Vorzugsweise werden zwei Stäbe in den Kohlenstoffschleifkörper eingelassen. Durch eine symmetrische Anordnung dieser Träger-Elemente kann erreicht werden, daß ein Durchbiegungseffekt durch unterschiedliche Wärmedehnung von Kohlenstoffleiste und Verstärkungsmaterial weitgehend vermieden werden kann.

Das Material des Trägers ist bevorzugt ein mit Fasern verstärktes wärmehärtendes Polymer. Geeignete Verstärkungsfasern sind Glasfasern, mineralische Fasern, Polymer-Fasern mit hoher Festigkeit wie die bekannten durch Gelspinnen erhältlichen hochfesten Polyäthylenfasern, hochfeste Polyesterfasern, hochfeste Polyacrylnitrilfasern, Aramidfasern, Kohlenstofffasern sowie Whisker aus Metallen oder keramischen Werkstoffen. Geeignete wärmehärtende Polymere sind beispielsweise Epoxidharze, Polyurethanharze, Polyesterharze, Phenolharze und Aminharze. Es ist im Rahmen der Erfindung auch möglich, jedoch weniger bevorzugt, faserverstärkte Thermoplaste wie Polypropylen, Polyester oder Polyamid zu verwenden, die die oben genannten Fasern als Verstärkungsmittel enthalten. Eine weitere bevorzugte Möglichkeit ist, als Trägermaterial mit KohlenstoffFasern verstärkten Kohlenstoff (CFC) einzusetzen. Es ist ebenfalls möglich, die Träger aus (leitfähigen) Metallen herzustellen, die ein möglichst hohes Verhältnis der Biegesteifigkeit zur Dichte aufweisen sollen. Bevorzugt für diese Anwendung ist Aluminium. Da die Träger durch die Verklebung nicht notwendig leitend mit dem Kohlenstoffschleifkörper verbunden sind, und die Leitfähigkeit der verwendeten Metalle häufig niedriger als die von Kupfer ist, verläuft der Strom bevorzugt in dem Kupferband und nicht in dem metallischen Träger.

Im Querschnitt hat der Kohlenstoffschleifkörper üblicherweise ein rechteckiges Profil, wobei die Kanten auf der dem Fahrdraht zugewandten Seite verrundet werden; der Verrundungsradius beträgt üblicherweise 1 bis 10 mm. Gebräuchlich sind auch trapezförmige Profile, wobei die oberen Kanten ebenfalls verrundet werden. Solche trapezförmigen Profile sind bezüglich des Luftwiderstandes günstiger. Der Kohlenstoffschleifkörper ist im Aufriß, parallel zur Richtung des Fahrdrahtes gesehen, auf der diesem zugewandten Seite häufig konvex ausgebildet. Bei diesem Querschnitt wird die Konstruktion gemäß der Erfindung bevorzugt so ausgebildet, daß auch die (dem Fahrdraht abgewandte) Unterseite eine entsprechende Krümmung aufweist, also konkav ist. Da die Nuten über die Länge des Kohlenstoffschleifkörpers eine konstante Tiefe aufweisen sollen, müssen dann auch die dem Fahrdraht zugewandte und die dem Fahrdraht abgewandte Seite der Träger eine entsprechende Krümmung (konvex und konkav) aufweisen. Bei der Konfektionierung der Trägerelemente durch Herausschneiden aus einer Platte mit Hilfe des Hochdruck-Wasserstrahl-Schneidens lassen sich derartige Formen einfach und kostengünstig realisieren.

Im Querschnitt ergibt sich damit eine Ansicht, bei der das auf der Unterseite des Kohlenstoffschleifkörpers aufgeklebte leitfähige Teil, bevorzugterweise ein Metallband, an beiden Seiten von Stegen umgeben ist, die den Weg von dem Metallteil bis auf die dem Fahrdraht zugewandte Seite des Kohlenstoffschleifkörpers erheblich verlängern. Diese Stege werden durch die überstehenden Teile der Träger gebildet. Bevorzugterweise steht der Träger mindestens 5 mm, insbesondere mindestens 8 mm, und besonderes bevorzugt 12 mm und mehr über die untere, dem Fahrdraht abgewandte Fläche des Kohlenstoffschleifkörpers hoch über. Damit ist eine wirksame Unterdrückung der Überschlagsneigung verbunden.

In den Kohlenstoffschleifkörper können die üblichen Abschaltmechanismen integriert werden, beispielsweise Anordnungen, die in dem Europäischen Patent EP-B 0 078 159, der Europäischen Anmeldung EP-A 0 402 666 und den Deutschen Patenten DE-C 38 17 743 sowie DE-C 39 05 962 beschrieben werden. Eine weitere mögliche Ausführungsform ist das Betriebsüberwachungssystem gemäß DE-A 44 25 460.

Die Befestigung des Schleifelemente auf dem Pantographen erfolgt wie bei den bekannten Konstruktionen durch Verschraubung oder andersartige Verbindung des Trägers mit dem Oberteil des Pantographen.

Die Auflaufhörner lassen sich ebenfalls an den Trägern befestigen. Sie sind insbesondere so konstruiert, daß an die Träger des Kohlenstoffschleifkörpers entsprechend gebogene, aus Faserverbundwerkstoff-Platten herausgeschnittene Teile durch Verschrauben, Vernieten oder Kleben befestigt werden. Die dem Fahrdraht zugewandte Seite kann dann bestimmungsgemäß verrundet werden und mit einem Gleitbelag versehen werden, der bevorzugt aus einem Metallblech besteht, wie in DE-A 43 26 613 beschrieben ist.

### Beispiele

In ein Bügelprofil (Profil 3522 der SGL CARBON GmbH, rechteckiger Querschnitt mit den Maßen 35 mm Breite und 22 mm Höhe, wobei die beiden dem Fahrdraht zugewandten Kanten mit einem Radius von 4 mm verrundet sind), wie es derzeit bei der Deutschen Bahn eingesetzt wird, wurden im Abstand von 5 mm vom jeweiligen Rand in der dem Fahrdraht abgewandten Seite zwei Nuten mit der Breite und der Tiefe von 5 mm eingefräst. Das Material des Kohlenstoffschleifkörpers (RH 82 der SGL CARBON GmbH) hat eine Dichte von 1,73 g/cm³, einen spezifischen elektrischen Widerstand von 37 µΩ·m und eine Biegefestigkeit von ca. 30 MPa. In die Nuten wurden Streifen aus einem mit Phenolharz gebundenen Glasfaser-Verbundwerkstoff mit dem Querschnitt 5 x 20 mm mit Hilfe eines Phenolharz-Klebers eingeklebt. Der eingesetzte Glasfaser-Verbundwerkstoff (®Pregnit GGPDE, Fa. Krempel, D-71665 Vaihingen) hat eine Biegefestigkeit von ca. 400 MPa. Unter den Kohlenstoffschleifkörper zwischen die beiden Träger-Streifen wurde ein Kupfer-Gewebeband (E-Cu) mit den Maßen 14 x 1,5 mm leitend geklebt. Dazu wurde (gemäß dem Verfahren der EP-A 0 313 880) der Kohlenstoffschleifkörper zunächst durch Sandstrahlen mit dem Sand ®Redurit F 40 (Fa. MunkSchmitz, Köln) in einer Körnung von 0,7 bis 0,8 mm aufgerauht (Rₜ = 72 µm, R_{z} = 59 µm), und dann die rauhe Fläche, ebenso wie das Kupfergewebeband, mit einer Mischung aus gleichen Massenanteilen Phenolharz-Kleber und Methanol bestrichen. Die Schichtdicke des Klebers betrug auf beiden Substraten ca. 0,1 mm. Die Klebstoffflächen wurden anschließend mit Kupfergrieß bestreut (0,1 bis 0,3 mm mittlerer Korndurchmesser). Die Kontaktflächen wurden mit einem Druck von ca. 30 MPa aufeinander gepreßt. Die Enden des Kupferbandes waren mit Preß-Kabelschuhen nach DIN 46 235, 16 mm, versehen.

Der fertige Stromabnehmer wurde dann elektrisch geprüft. Dazu wurde an beiden Enden des Kupferbandes Strom in den Stromabnehmer eingeleitet, der Abgriff erfolgte in der Mitte des Kohlenstoffprofils auf beiden Schmalseiten des Profils durch aufgepreßte verzinnte Kupferplatten. Entlang des Bügelprofils wurde dann die Oberflächen-Temperatur als Funktion des durchgeleiteten Stromes gemessen. Dabei wurde nach 5 min und nach 10 min (stationärer Wert) gemessen:

| Stromstärke | Oberflächentemperatur in °C | |
|---|---|---|
| in A | nach 5 min | nach 10 min |
| 115 | 45 | |
| 225 | 78 | 87 |
| 350 | 147 | 160 |
| 470 | 220 * | |

| | | |
|---|---|---|
| *: Wert nach 2,5 min, danach abgebrochen, da die Cu-Litze anläuft | | |

Die im Betrieb üblichen Stromstärken je Schleif-Abnehmer liegen deutlich unter 200 A; die überprüfte Anordnung weist daher noch deutliche Reserven auf.

Zur mechanischen Prüfung wurde der fertige Stromabnehmer im Vergleich zu dem unbearbeiteten Kohlenstoffprofil einem Biegetest unterworfen. Der Abstand der Unterstützungspunkte betrug 290 mm, der Stempel wurde in die Mitte des Kohlenstoffprofils aufgesetzt. Während die Belastung bei Bruch für das unbearbeitete Kohlenstoffprofil 1000 N betrug, wurde für den fertigen Stromabnehmer eine Bruchlast von 15 000 N bestimmt. (Die Andruck-Kraft des Stromabnehmers an den Fahrdraht beträgt üblicherweise ca. 100 N). Mit größeren Querschnitten der Träger stieg die Bruchlast noch weiter an. Es ist zu ersehen, daß trotz der "Verletzung" des Kohlenstoffprofils durch die eingefrästen Nuten die Biegelast bis zum Bruch erheblich erhöht werden konnte. Ein Versagen trat auch erst bei höherer Durchbiegung ein.

### Bezugszeichenliste

- 1: Kohlenstoffschleifkörper
- 2, 2', 2'': Nut
- 3, 3', 3'', 3''', 3^{IV}: Träger
- 4: elektrischer Leiter
- 5: Kleber für Träger
- 6: (elektrisch leitfähiger) Kleber für elektrischen Leiter
- 7: Kunststoff-Profil

## Patentansprüche

1. Schleifelement für Stromabnehmer zur Ableitung von elektrischer Energie von einer Fahrleitung auf ein elektrisch angetriebenes Fahrzeug, wobei die Fahrleitung ortsfest ist und die Stromabnehmer mit dem Fahrzeug verbunden und beweglich sind, mit den Elementen Kohlenstoffschleifkörper, Träger und elektrischer Leiter,
dadurch gekennzeichnet, daß
Träger und elektrischer Leiter separate Bauteile sind, wobei das Material der Träger ausgewählt ist aus faserverstärkten Verbundwerkstoffen und Metallen, und Träger und elektrischer Leiter auf der der Fahrleitung abgewandten Seite des Kohlenstoffschleifkörpers angeordnet sind, und der elektrische Leiter vorzugsweise in der Mitte dieser Seite angeordnet ist.

2. Schleifelement nach Patentanspruch 1,
dadurch gekennzeichnet, daß
der Träger aus zwei Teilen besteht, die in zur Längsachse des Kohlenstoffschleifkörpers eingearbeitete Nuten eingeklebt sind.

3. Schleifelement nach Patentanspruch 1,
dadurch gekennzeichnet, daß
der Träger aus einem Teil besteht, das flächig auf den Kohlenstoffschleifkörper aufgeklebt ist, wobei der Leiter zumindest teilweise in einer mittig auf der Unterseite des Kohlenstoffschleifkörpers eingearbeiteten Nut verläuft.

4. Schleifelement nach Patentanspruch 1,
dadurch gekennzeichnet, daß
der Träger aus einem Teil mit einem H-förmigen Profil besteht, das mit den oberen Schenkeln in den Kohlenstoffschleifkörper eingeklebt und mit der nach innen weisenden Oberfläche der Querrippe flächig auf den Kohlenstoffschleifkörper aufgeklebt ist, wobei der Leiter zumindest teilweise in einer mittig auf der Unterseite des Kohlenstoffschleifkörpers eingearbeiteten Nut verläuft.

5. Schleifelement nach Patentanspruch 1,
dadurch gekennzeichnet, daß
der Träger aus einem Teil mit einem U-förmigen Profil besteht, das mit den Schenkeln in den Kohlenstoffschleifkörper eingeklebt und mit der nach innen weisenden Oberfläche des unteren Querteils flächig auf den Kohlenstoffschleifkörper aufgeklebt ist, wobei der Leiter zumindest teilweise in einer mittig auf der Unterseite des Kohleschleifkörpers eingearbeiteten Nut verläuft.

6. Schleifelement nach einem der vorhergehenden Patentansprüche 1 bis 5,
dadurch gekennzeichnet, daß
der elektrische Leiter aus einem Metallgewebeband besteht, das mit dem Kohlenstoffschleifkörper leitfähig verklebt ist.

7. Schleifelement nach einem der vorhergehenden Patentansprüche 1 bis 5,
dadurch gekennzeichnet, daß
der elektrische Leiter aus einem Metallblechstreifen besteht, der mit dem Kohlenstoffschleifkörper leitfähig verklebt ist.

8. Schleifelement nach Patentanspruch 2,
dadurch gekennzeichnet, daß
in dem aus Trägern und Kohlenstoffschleifkörper mit darauf angeordnetem elektrischen Leiter gebildeten U-förmigen Raum eine bündig passende Platte oder ein bündig passendes U-förmiges Profil fixiert ist, wobei das U-förmige Profil nach der dem Fahrdraht abgewandten Seite geöffnet ist.

9. Schleifelement nach Patentanspruch 6,
dadurch gekennzeichnet, daß
das elektrisch leitende Metallgewebeband an mindestens einem Ende einen Kabelschuh oder eine Kabelöse trägt, die direkt mit dem Stromleiter des Pantographen an einem elektrisch betriebenen Fahrzeug verbunden ist.
